# EUROPEAN PATENT SPECIFICATION

(11) **EP 2 099 090 B1**
(45) Date of publication and mention of the grant of the patent: **15.08.2012**
(21) Application number: 07830612.3
(22) Date of filing: 26.10.2007
(51) Int. Cl.: H01M 14/00, H01L 31/04, H01M 2/08, H01G 9/20

(54) **DYE-SENSITIZED SOLAR CELL**
FARBSTOFFSENSIBILISIERTE SOLARZELLE
CELLULE SOLAIRE SENSIBILISÉE À UN COLORANT

(30) Priority: 10.11.2006 JP 2006304663; 19.04.2007 JP 2007110739
(43) Date of publication of application: 09.09.2009
(73) Proprietor: NITTO DENKO CORPORATION, Ibaraki-shi, Osaka 567-8680 (JP); Electric Power Development Co., Ltd., Chuo-ku, Tokyo 1048165 (JP)
(72) Inventor: HASEGAWA, Yuki, Ibaraki-shi Osaka 5678680 (JP); IGARASHI, Kazumasa, Ibaraki-shi Osaka 5678680 (JP); HIWATASHI, Kenichi, Chigasaki-shi Kanagawa 2530041 (JP); MASUYAMA, Naoto, Chigasaki-shi Kanagawa 2530041 (JP)
(74) Representative: Isarpatent
(86) International application number: PCT/JP2007/070878
(87) International publication number: WO 2008/056545

(56) References cited:
- EP-A1- 1 548 867
- JP-A- 05 335 612
- JP-A- 2001 089 616
- JP-A- 2001 298 208
- JP-A- 2006 012 673
- JP-A- 2006 185 646
- DATABASE WPI Week 200658 Thomson Scientific, London, GB; AN 2006-562372 XP000002656197, -& JP 2006 185646 A (TOKYO THREE BOND CO LTD) 13 July 2006 (2006-07-13)
- DATABASE WPI Week 200607 Thomson Scientific, London, GB; AN 2006-062578 XP000002656198, -& JP 2006 012673 A (SHINETSU POLYMER KK) 12 January 2006 (2006-01-12)
- DATABASE WPI Week 200156 Thomson Scientific, London, GB; AN 2001-505113 XP000002656199, -& JP 2001 089616 A (MITSUI DU PONT POLYCHEMICAL KK) 3 April 2001 (2001-04-03)

## Description

### TECHNICAL FIELD

The present invention relates to a dye-sensitized solar cell which includes glass substrates each formed with an electrically conductive transparent electrode film and adhesively sealed in opposed relation, and an electrolyte solution filled in a space between the glass substrates. More specifically, the invention relates to a dye-sensitized solar cell including a seal member which is highly resistant to the electrolyte solution and excellent in adhesive sealability and durability.

### BACKGROUND ART

A dye-sensitized solar cell which includes an electrically conductive transparent substrate formed with a dye-carrying semiconductor film such as of TiO₂, a counter electrode substrate and a redox-type electrolyte solution filled in a space between these substrates is promising as a less expensive next-generation solar cell because of its higher solar light conversion efficiency.

However, if a conventionally used ethylene-methacrylic acid copolymer ionomer resin is used as a sealing material for a dye-sensitized solar cell including a redox-type electrolyte solution such as of iodine or lithium iodide filled in a space between glass substrates or plastic film substrates, it is impossible to prevent leakage of the electrolyte solution and absorption of external moisture. Therefore, the dye-sensitized solar cell of this type is poor in durability. On the other hand, epoxy resin sealing materials, urethane resin sealing materials and photo-curable acryl resin sealing materials known as liquid crystal sealing materials are liable to swell with the electrolyte solution due to their polar structures. This adversely affects the structure of the dye-sensitized solar cell.

In view of this, it is proposed that a liquid epoxy resin or a silicone resin is used for sealing the electrolyte solution (see Patent Document 1). On the other hand, a sealing material containing a silane coupling agent and prepared by polymerizing an organo-hydrogen polysiloxane and a polyisoprene polymer having at least one alkenyl group in its molecule to be subjected to a hydrosilylation reaction in the presence of a hydrosilylation catalyst is proposed as a sealing material containing an elastomer excellent in electrolyte solution resistance for the dye-sensitized solar cell (see Patent Document 2).
Patent Document 1: JP-A-2000-30767
Patent Document 2: JP-A-2004-95248

### DISCLOSURE OF THE INVENTION

### PROBLEMS TO BE SOLVED BY THE INVENTION

However, the sealing material (seal member) disclosed in Patent Document 1 suffers from swelling or degradation of the resin with the electrolyte solution during prolonged sealing use, and has unsatisfactory properties. The sealing material disclosed in Patent Document 2 requires heating to 80 to 150°C for curing. The heating evaporates the electrolyte solution, leading to separation of the seal member. This results in leakage of the electrolyte solution.

In view of the foregoing, it is an object of the present invention to provide a dye-sensitized solar cell which includes a seal member free from the swelling and the degradation during prolonged sealing use and excellent in sealing property.

### MEANS FOR SOLVING THE PROBLEMS

According to the present invention to achieve the aforementioned object, there is provided a dye-sensitized solar cell according to claim 1, which includes a pair of glass substrates each having an electrically conductive transparent electrode film and disposed in predetermined spaced opposed relation with the electrically conductive transparent electrode films thereof facing inward, a seal member disposed between the pair of the glass substrates along a periphery of an electrically conductive transparent electrode film formation region to seal a space defined between the pair of glass substrates, and an electrolyte solution filled in the sealed space, wherein the seal member is composed of a material cured by photopolymerizing the following photopolymerizable composition (A), and the glass substrates each have a portion coated with a silane coupling agent of a (meth)acryloxyalkylsilane in contact with the seal member:
(A) a photopolymerizable composition essentially comprising a hydrogenated elastomer derivative having at least one (meth)acryloyl group at at least one of its opposite molecular terminals.

The inventors of the present invention conducted studies to provide a seal highly resistant to an electrolyte solution and excellent in adhesiveness and durability in a dye-sensitized solar cell. In the course of the studies, the inventors came up with an idea that photopolymerizable resin compositions containing a photopolymerizable resin as an effective component are useful as the sealing material, and further conducted studies. As a result, the inventors found that specific ones of the photopolymerizable resin compositions are useful, and that not only the sealing material but also a treatment of the portions of the glass substrates to be sealed with the sealing material (in contact with the sealing material) is essential for effective sealing, and attained the present invention.

### EFFECTS OF THE INVENTION

In the inventive dye-sensitized solar cell, the seal member is composed of the material cured by photopolymerizing the photopolymerizable composition (A) essentially comprising the hydrogenated elastomer derivative having at least one (meth)acryloyl group at at least one of its opposite molecular terminals, and the portions of the glass substrates to be brought into contact with the seal member are coated with the silane coupling agent of the (meth)acryloxyalkylsilane. That is, the present invention obviates the need for the heat-curing because the seal member is composed of the material cured by the photopolymerization, so that the separation of the seal member is prevented which may otherwise occur due to the evaporation of the electrolyte solution caused by the heating. The material for the seal member is cured by photopolymerizing the specific photopolymerizable composition (A) and, therefore, is free from the swelling and the degradation with the electrolyte solution during prolonged sealing use. In addition, the synergetic effect of the aforementioned specific silane coupling agent on the glass substrates provides higher adhesiveness and higher durability.

That is, the silane coupling agent is of the (meth)acryloxyalkylsilane. With the use of the silane coupling agent, photopolymerizable (meth)acryloyl groups are present in the surface coating layers on the glass substrates, and undergo the photopolymerization reaction together with the (meth)acryloyl groups in the photopolymerizable composition (A) to provide strong adhesiveness.

Where the photopolymerizable composition (A) contains a phyllosilicate or an insulative spherical inorganic filler, the seal member has a reduced moisture permeability and, hence, is further excellent in durability with reduced moisture absorption from the atmosphere during prolonged sealing use. Further, the photopolymerizable composition has higher thixotropy, thereby improving the dimensional accuracy of a seal width.

Where 3-(meth)acryloxypropyltrimethoxysilane is used as the silane coupling agent, the seal member has further excellent adhesiveness.

Where the hydrogenated elastomer derivative contains a hydrogenated polybutadiene or a hydrogenated polyisoprene in its main chain, the nonpolar structure of the main chain improves the durability against the electrolyte solution.

Where the hydrogenated elastomer derivative is a hydrogenated polybutadiene derivative or a hydrogenated polyisoprene derivative obtained through a reaction between a hydrogenated polybutadiene polyol and a hydroxy(meth)acrylate compound or between a hydrogenated polyisoprene polyol and the hydroxy(meth)acrylate compound by using a polyisocyanate as a linking group, the seal member has further excellent adhesiveness and excellent durability.

Where the hydrogenated elastomer derivative is a hydrogenated polybutadiene derivative or a hydrogenated polyisoprene derivative obtained through a reaction between a hydrogenated polybutadiene polyol and a (meth)acryloyl-containing isocyanate compound or between a hydrogenated polyisoprene polyol and the (meth)acryloyl-containing isocyanate compound, the seal member has further excellent adhesiveness and excellent durability as in the aforementioned case.

Where the photopolymerizable composition (A) contains a poly(meth)acrylate compound in addition to the hydrogenated elastomer derivative, the crosslinking density of the material for the seal member is increased. Therefore, the seal member is further excellent in durability and, when a photopolymerization initiator is used, the UV-curability is improved.

### BRIEF DESCRIPTION OF THE DRAWING

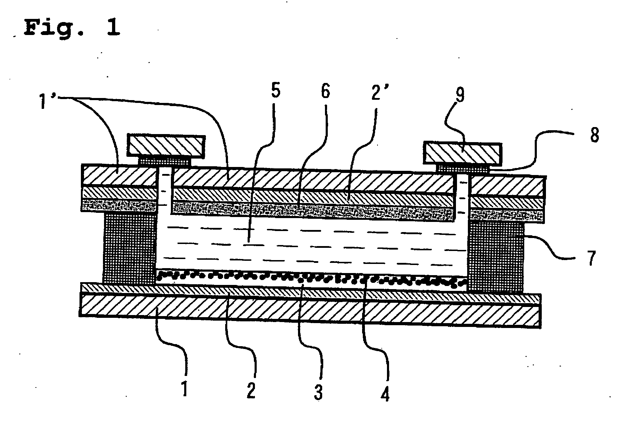

Fig. 1 is a sectional view illustrating an example of an inventive dye-sensitized solar cell.

### DESCRIPTION OF REFERENCE CHARACTERS

1,1': Glass substrates
7: Main seal (seal member)
8: End seal (seal member)
9: Thin glass piece

### DETAILED DESCRIPTION OF THE INVENTION

Next, the best mode for carrying out the invention will be described.

An inventive dye-sensitized solar cell is configured such that its seal member is composed of a material cured by photopolymerizing a photopolymerizable composition (A) essentially containing a hydrogenated elastomer derivative having at least one (meth)acryloyl group at at least one of its opposite molecular terminals, and glass substrate portions to be brought into contact with the seal member are coated with a silane coupling agent of a (meth)acryloxyalkylsilane. In the present invention, the (meth)acryloyl group means an acryloyl group and a methacryloyl group shown below.

| | |
|---|---|
| Acryloyl group: | CH₂=CH-CO- |
| Methacryloyl group: | CH₂=C(CH₃)-CO- |

The inventive dye-sensitized solar cell typically has a construction as shown in Fig. 1. In Fig. 1, reference characters 1, 1' denote transparent substrates of glass or the like (hereinafter referred to as "glass substrates"), and reference characters 2, 2' denote electrically conductive transparent electrode films. A reference character 3 denotes a titanium oxide film, and a reference character 4 denotes a sensitizing dye adsorbed on the titanium oxide film 3. A reference character 5 denotes an electrolyte solution, and a reference character 6 denotes a platinum vapor deposition film. A reference character 7 denotes a main seal (seal member), and a reference character 8 denotes end seals (seal member) which seal openings provided in the glass substrate 1' for injection of the electrolyte solution. A reference character 9 denotes thin glass pieces which seal the end seals.

Instead of the glass, an organic material such as a plastic material is usable as the material for the glass substrates 1, 1'. Examples of the plastic material include polyethylenes (PE), polypropylenes (PP), polyesters, nylons, polyethylene terephthalates (PET), polyethylene naphthalates (PEN), vinyl chloride, silicone resins and polyimides.

As described above, the portions of the glass substrates 1, 1' to be brought into contact with the seal member 7 are each formed with a coating film (not shown) by coating with the silane coupling agent of the (meth)acryloxyalkylsilane. Examples of the (meth)acryloxyalkylsilane silane coupling agent include acryloxyalkylsilanes and methacryloxyalkylsilanes, among which 3-acryloxypropyltrimethoxysilane and 3-methacryloxypropyltrimethoxysilane are preferred, and 3-acryloxypropyltrimethoxysilane having higher photopolymerization reactivity is more preferred. These (meth)acryloxyalkylsilane silane coupling agent may be used either alone or in combination. A solution prepared by dissolving 0.01 to 5.0 wt% of the (meth)acryloxyalkylsilane silane coupling agent in an organic solvent such as methanol or ethanol is applied onto the portions of the glass substrates 1, 1' to be brought into contact with the seal member 7, and the resulting coating films are heated to 60 to 150°C. Thus, the portions of the glass substrates are subjected to a surface-coating treatment.

The seal material 7 provided between the glass substrates 1, 1' is composed of a material cured by photopolymerizing the aforementioned photopolymerizable composition (A). The photopolymerizable composition (A) essentially contains the hydrogenated elastomer derivative. The hydrogenated elastomer derivative is not particularly limited as long as it has at least one (meth)acryloyl group at at least one of its opposite molecular terminals. The major chain of the hydrogenated elastomer derivative is preferably a hydrogenated polybutadiene or a hydrogenated polyisoprene.

Examples of the hydrogenated polybutadiene as the main chain of the hydrogenated elastomer derivative include hydrogenated 1, 4-polybutadienes, hydrogenated 1,2-polybutadienes, and copolymers and the like of hydrogenated 1,4-polybutadienes and hydrogenated 1,2-polybutadienes. Examples of the hydrogenated polyisoprene include hydrogenated 1,4-polyisoprenes, hydrogenated 1,2-polyisoprenes, and copolymers and the like of hydrogenated 1,4-polyisoprenes and hydrogenated 1,2-polyisoprenes.

More preferably, the hydrogenated elastomer derivative is a hydrogenated polybutadiene derivative (Component a1) or a hydrogenated polyisoprene derivative (Component a2) obtained through a reaction between a hydrogenated polybutadiene polyol and a hydroxy(meth)acrylate compound or between a hydrogenated polyisoprene polyol and the hydroxy(meth)acrylate compound by using a polyisocyanate as a linking group. Further, the hydrogenated elastomer derivative may be a hydrogenated polybutadiene derivative (Component a3) or a hydrogenated polyisoprene derivative (Component a4) obtained through a reaction between a hydrogenated polybutadiene polyol and a (meth)acryloyl-containing isocyanate compound or between a hydrogenated polyisoprene polyol and the (meth)acryloyl-containing isocyanate compound.

Components to be employed for synthesis of the hydrogenated polybutadiene derivative (Component a1) or the hydrogenated polyisoprene derivative (Component a2) through the reaction between the hydrogenated polybutadiene polyol and the hydroxy(meth)acrylate compound or between the hydrogenated polyisoprene polyol and the hydroxy(meth)acrylate compound by using the polyisocyanate as the linking group will be described.

The hydrogenated polybutadiene polyol and the hydrogenated polyisoprene polyol are preferably telechelic polymers each having reactive functional groups such as hydroxyl groups at opposite molecular terminals thereof. Examples of the hydrogenated polybutadiene polyol and the hydrogenated polyisoprene polyol include hydrogenated polybutadienes and hydrogenated polyisoprenes each having hydroxyl groups at opposite molecular terminals thereof.

The hydrogenated polybutadiene polyol is preferably a liquid hydrogenated polybutadiene polyol having a number average molecular weight of 500 to 5000, and the hydrogenated polyisoprene polyol is preferably a liquid hydrogenated polyisoprene polyol having a number average molecular weight of 500 to 130000.

Examples of the polyisocyanate serving as the linking group include hexamethylene diisocyanate, norbornene diisocyanate, isophorone diisocyanate, xylylene diisocyanate, hydrogenated xylylene diisocyanate, dicyclohexylmethane diisocyanate, tolylene diisocyanate, diphenylmethane diisocyanate and naphthalene diisocyanate, which may be used either alone or in combination. Among these polyisocyanates, saturated diisocyanates such as hexamethylene diisocyanate, norbornene diisocyanate, isophorone diisocyanate, hydrogenated xylylene diisocyanate and dicyclohexylmethane diisocyanate are preferred.

Examples of the hydroxy(meth)acrylate compound include monofunctional hydroxy(meth)acrylate compounds such as 2-hydroxyethyl (meth)acrylate, 2-hydroxypropyl (meth)acrylate, 2-hydroxybutyl (meth)acrylate, 2-hydroxyethyl (meth)acryloyl phosphate, 4-butylhydroxy(meth)acrylate and 2-(meth)acryloyloxyethyl-2-hydroxypropyl phthalate, difunctional hydroxy(meth)acrylate compounds such as glycerin di(meth)acrylate and trimethylolpropane di(meth)acrylate, and multifunctional hydroxy(meth)acrylate compounds such as 2-hydroxy-1,3-dimethacryloxypropane (glycerin dimethacrylate) and pentaerythritol tri(meth)acrylate, among which the multifunctional hydroxy(meth)acrylate compounds having two or more functional groups are preferred for improvement of the crosslinking density. In the present invention, the (meth)acrylates means acrylates and corresponding methacrylates.

For the synthesis, the proportions of the hydrogenated polybutadiene polyol or the hydrogenated polyisoprene polyol, the polyisocyanate and the hydroxy(meth)acrylate compound are as follows:
The polyisocyanate is preferably blended in a proportion of 2 to 10 equivalents, more preferably 4 to 8 equivalents, per hydroxyl equivalent (an average molecular weight per hydroxyl group) of the hydrogenated polybutadiene polyol or the hydrogenated polyisoprene polyol. If the proportion is less than 2 equivalents, a higher molecular weight linear polymer is liable to be produced. If the proportion is greater than 10 equivalents, a greater number of unreacted isocyanate groups tend to remain.

The hydroxy(meth)acrylate compound is preferably blended in a proportion of 1 to 2 equivalents, more preferably 1.1 to 1.3 equivalents, per isocyanate equivalent (a molecular weight per isocyanate group) of the polyisocyanate. If the proportion is less than 1 equivalent, isocyanate groups tend to remain. If the proportion is greater than 2 equivalents, a greater amount of the hydroxy(meth)acrylate compound tends to remain.

The hydrogenated polybutadiene derivative (Component a1) or the hydrogenated polyisoprene derivative (Component a2) is synthesized, for example, in the following manner. The hydrogenated polybutadiene polyol or the hydrogenated polyisoprene polyol is caused to react with the polyisocyanate in the presence of a catalyst of a metal such as titanium or tin or an organic metal salt such as dibutyltin laurate. After the hydroxyl groups of the hydrogenated polybutadiene polyol or the hydrogenated polyisoprene polyol sufficiently react with the isocyanate groups, the hydroxy(meth)acrylate compound is added for a reaction with the residual isocyanate groups. Thus, the hydrogenated elastomer derivative is provided. Where the resulting hydrogenated elastomer derivative is highly viscous or semi-solid, the hydrogenated elastomer derivative is heated to 30 to 80°C, or a solvent such as toluene or xylene is added to the reaction system. Thus, the reaction smoothly proceeds, thereby facilitating the synthesis.

The degree of the synthesis reaction can be determined by measuring the infrared absorption spectrum at a characteristic absorption band attributable to the isocyanate group (at about 2260 cm⁻¹), because the absorbance at characteristic absorption band attributable to the isocyanate group is reduced as the reaction proceeds. The completion of the synthesis reaction is determined based on the fact that the characteristic absorption band attributable to the isocyanate group is reduced to zero.

After the completion of the reaction, the reaction product is rinsed with a solvent such as acetonitrile for removal of a soluble component thereof, and then the solvent is removed in a known manner by means of an evaporator or the like. Thus, the hydrogenated elastomer derivative having at least one (meth)acryloyl group at at least one of its opposite molecular terminals according to the present invention is provided.

On the other hand, components to be employed for synthesis of the hydrogenated polybutadiene derivative (Component a3) or the hydrogenated polyisoprene derivative (Component a4) through the reaction between the hydrogenated polybutadiene polyol and the (meth)acryloyl-containing isocyanate compound or between the hydrogenated polyisoprene polyol and (meth)acryloyl-containing isocyanate compound will be described.

The hydrogenated polybutadiene polyol and the hydrogenated polyisoprene polyol are preferably telechelic polymers each having reactive functional groups such as hydroxyl groups at opposite molecular terminals thereof. Examples of the hydrogenated polybutadiene polyol and the hydrogenated polyisoprene polyol include hydrogenated polybutadienes and hydrogenated polyisoprenes each having hydroxyl groups at opposite molecular terminals thereof.

The hydrogenated polybutadiene polyol is preferably a liquid hydrogenated polybutadiene polyol having a number average molecular weight of 500 to 5000, and the hydrogenated polyisoprene polyol is preferably a liquid hydrogenated polyisoprene polyol having a number average molecular weight of 500 to 130000.

Examples of the (meth)acryloyl-containing isocyanate compound include 2-(meth)acryloyloxyethyl isocyanate and 1,1-bis(acryloyloxymethyl) ethyl isocyanate.

For the synthesis, the proportions of the hydrogenated polybutadiene polyol or the hydrogenated polyisoprene polyol and the (meth)acryloyl-containing isocyanate compound are as follows:
The (meth)acryloyl-containing isocyanate compound is preferably blended in a proportion of 1 to 3 equivalents, more preferably 1.2 to 2 equivalents, per hydroxyl equivalent (an average molecular weight per hydroxyl group) of the hydrogenated polybutadiene polyol or the hydrogenated polyisoprene polyol. If the proportion is less than 1 equivalent, hydroxyl groups tend to remain. If the proportion is greater than 3 equivalents, unreacted isocyanate groups tend to remain.

The hydrogenated polybutadiene derivative (Component a3) or the hydrogenated polyisoprene derivative (Component a4) is synthesized, for example, in the following manner. The hydrogenated polybutadiene polyol or the hydrogenated polyisoprene polyol is caused to react with the (meth)acryloyl-containing isocyanate compound in the presence of a catalyst of a metal such as titanium or tin or an organic metal salt such as dibutyltin laurate. The reaction between the hydroxyl groups of the hydrogenated polybutadiene polyol or the hydrogenated polyisoprene polyol and the isocyanate groups of the (meth)acryloyl-containing isocyanate compound provides the hydrogenated elastomer derivative. Where the resulting hydrogenated elastomer derivative is highly viscous or semi-solid, the hydrogenated elastomer derivative is heated to 30 to 80°C, or a solvent such as toluene or xylene is added to the reaction system. Thus, the reaction smoothly proceeds, thereby facilitating the synthesis.

The degree of the synthesis reaction can be determined by measuring the infrared absorption spectrum at a characteristic absorption band attributable to the isocyanate group (at about 2260 cm⁻¹), because the absorbance at the characteristic absorption band attributable to the isocyanate group is reduced as the reaction proceeds. The completion of the synthesis reaction is determined when the characteristic absorption band attributable to the isocyanate group is reduced to zero.

After the completion of the reaction, the reaction product is rinsed with a solvent such as acetonitrile for removal of a soluble component thereof, and then the solvent is removed in a known manner by means of an evaporator or the like. Thus, the hydrogenated elastomer derivative having at least one (meth)acryloyl group at at least one of its opposite molecular terminals according to the present invention is provided.

The proportion of the hydrogenated elastomer derivative is preferably 1 to 99 wt%, more preferably 10 to 90 wt%, based on the overall amount of the photopolymerizable composition (A) in the present invention.

In the present invention, the photopolymerizable composition (A) to be used for the seal member 7 essentially contains any of the aforementioned various hydrogenated elastomer derivatives, and contains a phyllosilicate and/or an insulative spherical inorganic filler as optional components. These may be used either alone or in combination.

The phyllosilicate is a silicate mineral including exchangeable interlaminar cations, and may be a naturally occurring phyllosilicate or a synthesized phyllosilicate. The phyllosilicate is not particularly limited, but examples thereof include smectite clay minerals such as montmorillonite, saponite, hectorite, beidellite, stevensite and nontrolite, and swellable mica, vermiculite and halloysite, which may be used either alone or in combination. Among these phyllosilicates, at least one of swellable mica and lipophilic smectite each subjected to an organic treatment and having affinity for an organic solvent with their interlaminar Na ions exchanged with cations is preferably used.

The form of the phyllosilicate is not particularly limited, but the phyllosilicate is preferably crystalline particles having an average length of 0.005 to 10 µm and a thickness of 0.001 to 5 µm with an aspect ratio of 10 to 500.

The phyllosilicate is a laminar clay mineral having metal cations such as Na ions intercalated between its layers. A phyllosilicate organically treated with dimethyl distearyl ammonium chloride, chloroaminolauric acid, a quaternary ammonium salt or a quaternary phosphonium salt for ion exchange of the Na ions is preferably used. The organically treated phyllosilicate with its Na ions ion-exchanged has higher affinity for the resin and, therefore, can be easily dispersed in the resin by means of a high-speed shearing dispersing machine such as a three-roll mill or a ball mill.

Examples of the insulative spherical inorganic filler include silica powder, alumina powder, titanium oxide powder, calcium carbonate powder and calcium silicate powder, which may be used either alone or in combination. It is possible to design the insulative spherical inorganic filler in any desired manner to impart surfaces of the filler with a hydrophobic property or a hydrophilic property for dispersibility of the filler in the hydrogenated elastomer derivative. For easier improvement of the affinity for the resin component, the silica powder is preferably used, and fused spherical silica powder is particularly preferred.

The insulative spherical inorganic filler preferably has an average particle diameter of 0.01 to 1 µm and a maximum particle diameter of not greater than 10 µm, more preferably an average particle diameter of 0.05 to 1 µm and a maximum particle diameter of not greater than 1 µm. If the average particle diameter is less than 0.01 µm, the specific surface area is too great, so that the effect of reducing the moisture permeability of the cured material is insufficient. If the average particle diameter is greater than 1 µm, the UV transmissive property of the seal member is impaired, so that the photo-curability is unsatisfactory. If the maximum particle diameter is greater than 10 µm, the UV transmissive property is impaired, so that the photo-curability is unsatisfactory.

The average particle diameter and the maximum particle diameter are measured by means of a laser diffraction-scattering particle size distribution analyzer. The average particle diameter and the maximum particle diameter are values determined with the use of a sample arbitrarily extracted from a population by means of the aforementioned analyzer.

The organically treated phyllosilicates out of the aforementioned phyllosilicates, and the insulative spherical inorganic fillers are preferably chemically surface-modified. This improves the affinity for the resin component such as the hydrogenated elastomer derivative, thereby contributing to reduction in the viscosity of the uncured solution and improvement of the dispersibility of the phyllosilicate and the insulative spherical inorganic filler.

A compound to be used for the chemical modification is not particularly limited, as long as it is reactive with functional groups such as hydroxyl groups and carboxyl groups present in surfaces of the organically treated phyllosilicate and the insulative spherical inorganic filler. Preferred examples of such a compound include reactive silane compounds such as silane coupling agents and silylation agents, titanate compounds and isocyanate compounds, which may be used either alone or in combination.

The compound for the chemical modification is used in the same manner as in a conventionally known surface treatment of an inorganic filler, e.g., a surface treatment to be performed in an organic solvent.

The silane coupling agent is not particularly limited, but examples thereof include 2-(3,4-epoxycyclohexyl)ethyltrimethoxysilane, 3-glycidoxypropyltrimethoxysilane, 3-glycidoxypropylmethyldiethoxysilane, 3-glycidoxypropyltriethoxysilane, p-styryltrimethoxysilane, 3-methacryloxypropylmethyldimethoxysilane, 3-methacryloxypropyltrimethoxysilane, 3-methacryloxypropyltriethoxysilane, 3-acryloxypropyltrimethoxysilane, N-2-(aminoethyl)-3-aminopropylmethyldimethoxysilane, N-2-(aminoethyl)-3-aminopropyltrimethoxysilane, N-2-(aminoethyl)-3-aminopropyltriethoxysilane, 3-aminopropyltrimethoxysilane, 3-triethoxysilyl-N-(1,3-dimethylbutylidene) propylamine, N-phenyl-3-aminopropyltriethoxysilane, a hydrochloric acid salt of N-(vinylbenzyl)-2-aminoethyl-3-aminopropyltrimethoxysilane, 3-ureidopropyltrimethoxy-silane, 3-chloropropyltrimethoxy-silane, 3-mercaptopropyl methyldimethoxysilane, 3-mercaptopropyl trimethoxysilane, bis(triethoxysilylpropyl) tetrasulfide and 3-isocyanatopropyltriethoxysilane, which may be used either alone or in combination.

The silylation agent is not particularly limited, but examples thereof include methyltrichlorosilane, methyldichlorosilane, dimethyldichlorosilane, trimethylchlorosilane, phenyltrichlorosilane, diphenyldichlorosilane, trifluoropropyltrichlorosilane and hexamethyldisilazane, which may be used either alone or in combination.

The titanate compound is not particularly limited, but examples thereof include tetraalkyl titanate compounds such as tetraisopropyl titanate and tetra-n-butyl titanate, and their lower molecular weight condensation products, which may be used either alone or in combination.

The isocyanate compound is not particularly limited, but examples thereof include (meth)acryloxyisocyanate compounds such as 2-isocyanatoethyl methacrylate, 2-isocyanatoethyl acrylate and 1,1-bis(acryloxymethyl)ethyl isocyanate, which may be used either alone or in combination.

The phyllosilicate is preferably present in the composition (A) in a proportion of 0.1 to 20 wt%, more preferably 1 to 10 wt%, based on the overall amount of the sealing material. If the proportion is less than 0.1 wt%, the moisture permeability of the sealing material is insufficiently reduced. If the proportion is greater than 20 wt%, the viscosity of the uncured liquid sealing material is extremely high, thereby causing a problem in a coating process.

The insulative spherical inorganic filler is preferably present in the composition (A) in a proportion of 30 to 70 wt%, more preferably 40 to 60 wt%. If the proportion is less than 30 wt%, the moisture permeability of the sealing material is insufficiently reduced. If the proportion is greater than 70 wt%, the viscosity of the uncured liquid sealing material is extremely high, thereby causing a problem in the coating process.

As required, the photopolymerizable composition (A) contains a poly(meth)acrylate compound (Component b) and a photopolymerization initiator (Component c) as optional components.

The poly(meth)acrylate compound (Component b) serves as a diluent when the hydrogenated elastomer derivative is blended in the photopolymerizable composition (A), and serves as a crosslinking agent when the photopolymerizable composition (A) is cured. Examples of the poly(meth)acrylate compound include multifunctional (meth)acrylates.

Examples of the multifunctional (meth)acrylates include difunctional (meth)acrylates such as 1,4-butandiol di(meth)acrylate, 1,6-hexandiol di(meth)acrylate, 1,9-nonane di(meth)acrylate, 1,10-decandiol di(meth)acrylate, 1,12-dodecandiol di(meth)acrylate, 1,12-octadecandiol di(meth)acrylate, 2-n-butyl-2-ethyl-1,3-propandiol di(meth)acrylate, tripropyleneglycol di(meth)acrylate, norbornene di(meth)acrylate and dimethyloldicyclopentane di(meth)acrylate, trifunctional (meth)acrylates such as trimethylolpropane tri(meth)acrylate and pentaerythritol tri(meth)acrylate, and other poly(meth)acrylate compounds, which may be used either alone or in combination. For compatibility with the hydrogenated elastomer derivative, dimethyloldicyclopentane di(meth)acrylate is preferably used.

In the present invention, a monofunctional (meth)acrylate may be used in combination with any of the aforementioned multifunctional (meth)acrylates as the poly(meth)acrylate compound (Component b), as long as the adhesiveness of the seal member of the dye-sensitized solar cell is not impaired.

Examples of the monofunctional (meth)acrylate include isobutyl (meth)acrylate, t-butyl (meth)acrylate, isooctyl (meth)acrylate, lauryl (meth)acrylate, styryl (meth)acrylate, isobonyl (meth)acrylate and cyclohexyl (meth)acrylate, which may be used either alone or in combination.

The proportion of the poly(meth)acrylate compound (Component b) is preferably 1 to 99 wt%, more preferably 10 to 90 wt%, based on the overall amount of the photopolymerizable composition (A) in the present invention.

Usable as the photopolymerization initiator (Component c) is a known photo-radical generator. Examples of the photopolymerization initiator include 2,2-dimethoxy-1,2-diphenylethan-1-one, 1-hydroxycyclohexyl phenyl ketone, 2-hydroxy-2-methyl-1-phenylpropan-1-one, 2-methyl-1-(4-methylthiophenyl)-2-morpholinopropan-1-one, bis(2,4,6-trimethylbenzoyl)-phenylphosphine oxide, which may be used either alone or in combination.

The proportion of the photopolymerization initiator (Component c) is preferably 0.1 to 30 wt%, more preferably 0.5 to 20 wt%, based on the overall amount of the photopolymerizable composition (A) in the present invention. If the proportion is less than 0.1 wt%, the polymerization degree tends to be insufficient. If the proportion is greater than 30 wt%, the amount of a decomposition residue is increased, and the durability of the seal member tends to be impaired.

In addition to the aforementioned components, other additives such as an antioxidant, a defoaming agent, a surfactant, a colorant, an inorganic filler, an organic filler, various spacers and a solvent may be blended in the photopolymerizable composition (A) to be used for the seal member 7 according to the use purpose in the present invention. These additives may be used either alone or in combination.

The photopolymerizable composition (A) thus prepared is irradiated with ultraviolet radiation by means of a UV lamp or the like and, as required, post-cured at a predetermined temperature.

In the present invention, the same photopolymerizable composition and the same curing method may be employed for the other seal members 8.

Conventionally known materials are used for the electrically conductive transparent electrode films 2, 2', the titanium oxide film 3, the sensitizing dye 4, the electrolyte solution 5, the platinum vapor deposition film 6 and the thin glass pieces 9 in Fig. 1.

Next, a method of producing the dye-sensitized solar cell will be described. The dye-sensitized solar cell shown in Fig. 1 is produced, for example, in the following manner. First, a glass substrate 1 including an electrically conductive transparent electrode film 2 formed thereon and a titanium oxide film 3 formed on an upper surface of the electrically conductive transparent electrode film 2 and carrying a sensitizing dye 4 adsorbed on the titanium oxide film 3 is prepared, and a portion of the glass substrate 1 to be brought into contact with a seal member 7 is coated with the silane coupling agent of the (meth)acryloxyalkylsilane. On the other hand, another glass substrate 1' including an electrically conductive transparent electrode film 2' to be opposed to the glass substrate 1 is prepared, and a platinum vapor deposition film 6 is formed on an upper surface of the electrically conductive transparent electrode film 2' on the substrate 1' by vapor deposition. A portion of the glass substrate 1' to be brought into contact with the seal member 7 is also coated with the silane coupling agent of the (meth)acryloxyalkylsilane. Then, the photopolymerizable composition (A) preliminarily prepared is applied onto the predetermined portion of at least one of the glass substrates 1, 1', whereby an uncured seal member 7 is formed. Then, the glass substrates 1, 1' are bonded to each other with the seal member 7 with the electrically conductive transparent electrode films 2, 2' facing inward, and the seal member 7 is irradiated with ultraviolet radiation, whereby a main seal member 7 is formed. In turn, an electrolyte solution 5 is injected into a space defined between the bonded glass substrates 1, 1' through an opening formed in the glass substrate 1', and then thin glass pieces 9 on which the same composition as for the seal member 7 is applied are respectively placed over the openings. The composition is cured by irradiation with ultraviolet radiation to seal the openings (form end seals 8). Thus, the dye-sensitized solar cell shown in Fig. 1 is provided.

In the dye-sensitized solar cell shown in Fig. 1, the electrolyte solution layer and the seal members may each have a proper thickness (a distance between the substrates) and a proper width according to the use purpose and application. Typically, the seal members have a width of about 1 to about 5 mm and a thickness of 50 to 500 µm.

Next, inventive examples will be described in conjunction with comparative examples. However, it should be understood that the invention be not limited to these inventive examples.

### EXAMPLES

Prior to implementation of the examples, ingredients for the following components were prepared or synthesized.

### (Meth)acryloxyalkylsilane silane coupling agent

As the (meth)acryloxyalkylsilane silane coupling agent, 3-acryloxypropyltrimethoxysilane and 3-methacryloxypropyltrimethoxysilane were prepared.

### Synthesis of elastomer derivatives

### (1) Synthesis of hydrogenated elastomer derivative (a)

First, 15 g (0.01 mol) of a hydrogenated polybutadiene having hydroxyl groups at its opposite molecular terminals as represented by the following general formula (1) (having a number average molecular weight of about 1500, a hydroxyl value of 750 KOH mg/g, an iodine value of 10 I₂ mg/100g and a viscosity of 30 Pa·s/25°C), 10.2 g (0.05 mol) of norbornene diisocyanate and 20g of toluene were put in a glass reactor, and heated to 50°C in the stream of nitrogen gas. Then, 0.4 g of an ethyl acetate solution of 5 wt% dibutyltin laurate was added to the resulting mixture, and a reaction was allowed to proceed at 50°C for 6 hours. Thereafter, 0.001 g of hydroquinone and 20.7 g (0.09 mol) of 2-hydroxy-1,3-dimethacryloxypropane (glycerin dimethacrylate) were added to the resulting mixture, and a reaction was allowed to proceed at 60°C for 6 hours. In turn, the reaction product was poured in an excess amount of acetonitrile and stirred to be washed, and then a solid component was separated from a liquid component and dried at a reduced pressure. Thus, an intended hydrogenated elastomer derivative (a) was provided. The absorbance at a characteristic absorption band (about 2260 cm⁻¹) attributable to the isocyanate group in an infrared absorption spectrum of the reaction product (measured by an analyzer FT-IR available under NICOLET IR200 from Thermo Electron KK) was zero. Further, the average molecular weight of the reaction product measured on the basis of a polystyrene calibration standard by means of a gel permeation chromatograph (GPC available under HLC-8120 from Toso Co., Ltd.) was 6150. 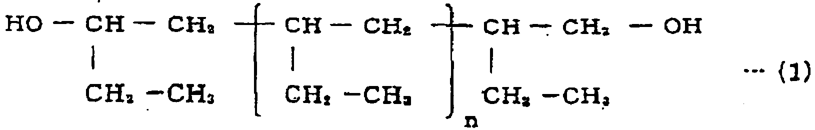 Wherein n is a positive integer.

### (2) Synthesis of hydrogenated elastomer derivative (b)

A hydrogenated elastomer derivative (b) was synthesized in substantially the same manner as the hydrogenated elastomer derivative (a), except that 15 g (0.005 mol) of a hydrogenated polybutadiene having hydroxyl groups at its opposite molecular terminals as represented by the above general formula (1) (having a number average molecular weight of about 3000, a hydroxyl value of 30 KOH mg/g, an iodine value of 10 I₂ mg/100g and a viscosity of 80 Pa·s/25°C) was used instead of the hydrogenated polybutadiene (having a number average molecular weight of about 1500) used for the synthesis of the hydrogenated elastomer derivative (a). The absorbance at a characteristic absorption band (about 2260 cm⁻¹) attributable to the isocyanate group in an infrared absorption spectrum (FT-IR) of the reaction product was zero. Further, the average molecular weight of the reaction product measured on the basis of a polystyrene calibration standard by means of a gel permeation chromatograph (GPC) was 7500.

### (3) Synthesis of hydrogenated elastomer derivative (c)

A hydrogenated elastomer derivative (c) was synthesized in substantially the same manner as the hydrogenated elastomer derivative (a), except that 140 g (0.05 mol) of a hydrogenated polyisoprene having hydroxyl groups at its opposite molecular terminals as represented by the following general formula (2) (having a number average molecular weight of about 2800, a hydroxyl value of 4 KOH mg/g, an iodine value of 40 I₂ mg/100g and a viscosity of 1500 Pa·s/25°C) was used instead of the hydrogenated polybutadiene used for the synthesis of the hydrogenated elastomer derivative (a). The absorbance at a characteristic absorption band (about 2260 cm⁻¹) attributable to the isocyanate group in an infrared absorption spectrum (FT-IR) of the reaction product was zero. Further, the average molecular weight of the reaction product measured on the basis of a polystyrene calibration standard by means of a gel permeation chromatograph (GPC) was 28800. 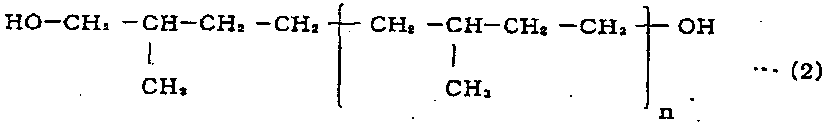 wherein n is a positive integer.

### (4) Synthesis of hydrogenated elastomer derivative (d)

First, 15 g (0.01 mol) of the hydrogenated polybutadiene having a number average molecular weight of about 1500 for the synthesis of the hydrogenated elastomer derivative (a), 7 g (0.03 mol) of 1,1-bis(acryloyloxymethyl)ethyl isocyanate and 0.3 g of an ethyl acetate solution of 5 wt% dibutyltin laurate were added, and a reaction was allowed to proceed at 50°C for 6 hours in the stream of nitrogen gas. In turn, the reaction product was poured in an excess amount of acetonitrile and stirred to be washed, and then a solid component was separated from a liquid component and dried at a reduced pressure. Thus, an intended hydrogenated elastomer derivative (d) was provided. The absorbance at a characteristic absorption band (about 2260 cm⁻¹) attributable to the isocyanate group in an infrared absorption spectrum (FT-IR) of the reaction product was zero. Further, the average molecular weight of the reaction product measured on the basis of a polystyrene calibration standard by means of a gel permeation chromatograph (GPC) was 5020.

### (5) Synthesis of hydrogenated elastomer derivative (e)

A hydrogenated elastomer derivative (e) was synthesized in substantially the same manner as the hydrogenated elastomer derivative (d), except that 30 g (0.01 mol) of the hydrogenated polybutadiene having a number average molecular weight of 3000 for the synthesis of the hydrogenated elastomer derivative (b) was used instead of the hydrogenated polybutadiene (having a number average molecular weight of about 1500) used for the synthesis of the hydrogenated elastomer derivative (d). A characteristic absorption band (about 2260 cm⁻¹) attributable to the isocyanate group in an infrared absorption spectrum (FT-IR) of the reaction product was zero. Further, the average molecular weight of the reaction product measured on the basis of a polystyrene calibration standard by means of a gel permeation chromatograph (GPC) was 7290.

### (6) Synthesis of hydrogenated elastomer derivative (f)

A hydrogenated elastomer derivative (f) was synthesized in substantially the same manner as the hydrogenated elastomer derivative (d), except that 30 g (0.012 mol) of a hydrogenated polyisoprene having hydroxyl groups at its opposite molecular terminals as represented by the above general formula (2) (having a number average molecular weight of about 2500, a hydroxyl value of 50 KOH mg/g, an iodine value of 5 g/100g and a viscosity of 75 Pa·s/30°C) was used instead of the hydrogenated polybutadiene (having a number average molecular weight of about 1500) used for the synthesis of the hydrogenated elastomer derivative (d) and 15 g of toluene was used. The absorbance at a characteristic absorption band (about 2260 cm⁻¹) attributable to the isocyanate group in an infrared absorption spectrum (FT-IR) of the reaction product was zero. Further, the average molecular weight of the reaction product measured on the basis of a polystyrene calibration standard by means of a gel permeation chromatograph (GPC) was 9790.

### (7) Synthesis of unsaturated elastomer derivative (g)

An unsaturated elastomer derivative (g) was synthesized in substantially the same manner as the hydrogenated elastomer derivative (a), except that 30 g (0.02 mol) of an unsaturated polybutadiene having hydroxyl groups at its opposite molecular terminals as represented by the following general formula (3) (having a number average molecular weight of about 1500, a hydroxyl value of 70 KOH mg/g and a viscosity of 90 Pa·s/25°C) was used instead of the hydrogenated polybutadiene used for the synthesis of the hydrogenated elastomer derivative (a). The absorbance at a characteristic absorption band (about 2260 cm⁻¹) attributable to the isocyanate group in an infrared absorption spectrum (FT-IR) of the reaction product was zero. Further, the average molecular weight of the reaction product measured on the basis of a polystyrene calibration standard by means of a gel permeation chromatograph (GPC) was 5900. 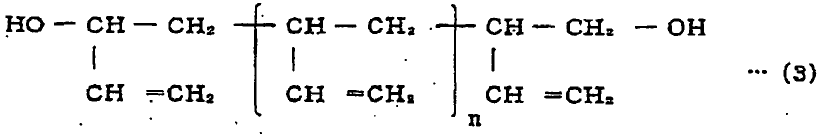 wherein n is a positive integer.

### (8) Synthesis of unsaturated elastomer derivative (h)

An unsaturated elastomer derivative (h) was synthesized in substantially the same manner as the hydrogenated elastomer derivative (d), except that 15 g (0.01 mol) of the unsaturated polybutadiene having a number average molecular weight of about 1500 for the synthesis of the unsaturated elastomer derivative (g) was used instead of the hydrogenated polybutadiene used for the synthesis of the hydrogenated elastomer derivative (d). A characteristic absorption band (about 2260 cm⁻¹) attributable to the isocyanate group in an infrared absorption spectrum (FT-IR) of the reaction product was zero. Further, the average molecular weight of the reaction product measured on the basis of a polystyrene calibration standard by means of a gel permeation chromatograph (GPC) was 4900.

### Poly(meth)acrylate compound

As the poly(meth)acrylate compound, dimethyloldicyclopentane dimethacrylate and 1,6-hexandiol diacrylate were prepared.

### Photopolymerization initiator

As the photopolymerization initiator, a photo-radical polymerization initiator IRGACURE 651 available form Chiba Specialty Chemicals Co., Ltd. was prepared.

### Organically treated phyllosilicate

### (1) Organically treated swellable mica

Interlaminar Na ions of a mica were replaced with a tetraalkyl ammonium compound. Thus, an organically treated swellable mica having an average length of 5 µm, a thickness of 0.1 to 0.5 µm, an aspect ratio of 20 to 30 and an absolute specific gravity of 2.5 was prepared.

### (2) Organically treated synthetic smectite

Exchangeable interlaminar cations (Na⁺, Mg²⁺, Li⁺ and the like) of a smectite were replaced with a tetraalkyl ammonium compound. Thus, an organically treated synthetic smectite having a length of 0.1 to 2 µm, a thickness of 0.001 to 0.025 µm, an aspect ratio of 80 to 1000 and an absolute specific gravity of 2.7 was prepared.

### Organically treated insulative spherical inorganic filler

### (1) Organically treated spherical silica α

First, 20 g of a spherical synthetic silica having a surface hydroxyl group concentration of 0.002 mmol/g, a specific surface area of 28.6 m²/g, an average particle diameter of 0.1 µm and a maximum particle diameter of 2 µm, 12.91 g of hexamethylene disilazane and 100 g of hexane were put in a glass flask provided with a cooling water pipe, and the resulting mixture was refluxed at about the boiling point of hexane (65 to 69°C) for two hours. Thereafter, the resulting spherical synthetic silica was filtered out with the use of a paper filter, and dried at a reduced pressured at 40°C for 6 hours. Thus, an organically treated spherical silica α was provided. In the infrared absorption spectrum (FT-IR) of the organically treated spherical silica α, absorption was observed at a characteristic absorption band (about 2960 cm⁻¹) attributable to the methyl group. (2) Organically treated spherical silica β

First, 20 g of a spherical synthetic silica having a surface hydroxyl group concentration of 0.002 mmol/g, a specific surface area of 28.6 m²/g, an average particle diameter of 0.1 µm and a maximum particle diameter of 2 µm, 2.7 g of 3-acryloxypropyltrimethoxysilane, 100 g of methanol and 0.054 g of acetic acid were put in a glass flask provided with a cooling water pipe, and the resulting mixture was stirred at about a room temperature (22 to 26°C) for 12 hours. Thereafter, the resulting spherical synthetic silica was filtered out with the use of a paper filter, and dried at a reduced pressure at 60°C for 12 hours in a shade. Thus, an organically treated spherical silica β was provided. In the infrared absorption spectrum (FT-IR) of the organically treated spherical silica β, absorption was observed at characteristic absorption bands (about 1620 cm⁻¹ and about 1720 cm⁻¹) attributable to the acryloyl group. (3) Organically treated spherical silica γ

First, 20 g of a spherical synthetic silica having a surface hydroxyl group concentration of 0.002 mmol/g, a specific surface area of 28.6 m²/g, an average particle diameter of 0.1 µm and a maximum particle diameter of 2 µm, 22.34 g of 2-isocyanatoethyl methacrylate, 100 g of toluene and 2.3 g of an ethyl acetate solution of 5 wt% dibutyltin laurate were put in a glass flask provided with a cooling water pipe, and a reaction was caused to proceed at 50°C for 6 hours in a shade. Thereafter, the resulting spherical synthetic silica was filtered out with the use of a paper filter, and dried at a reduced pressure at 60°C for 12 hours in a shade. Thus, an organically treated spherical silica γ was provided. In the infrared absorption spectrum (FT-IR) of the organically treated spherical silica γ, The absorbance at a characteristic absorption band (about 2260 cm⁻¹) attributable to the isocyanate group was zero, and absorption was observed at characteristic absorption bands (about 1620 cm⁻¹ and about 1720 cm⁻¹) attributable to the acryloyl group.

### Example 1

The following materials (I) and (II) were prepared, and assembled in the following manner (III).

### (I) Preparation of glass substrates each formed with electrically conductive transparent electrode film and each having portion coated with (meth)acryloxyalkylsilane silane coupling agent to be brought into contact with seal member

A glass substrate having an electrically conductive transparent ITO electrode film and a titanium oxide semiconductor film formed on an upper surface of the electrically conductive transparent ITO electrode film and carrying L-4,4'-dicarboxy-2,2'-bipyridyl(N3 dye) adsorbed on the titanium oxide semiconductor film was prepared, and a methanol solution of 1 wt% 3-acryloxypropyltrimethoxysilane was applied onto a portion of the glass substrate to be brought into contact with a seal member and dried at 100°C for 10 minutes. Thus, the glass substrate surface-coated with the silane coupling agent was prepared.

Further, a glass substrate having an electrically conductive transparent electrode film to be opposed to the aforementioned glass substrate was prepared, and platinum was vapor-deposited on an upper surface of the electrically conductive transparent electrode film of this substrate. Then, a methanol solution of 1 wt% 3-acryloxypropyltrimethoxysilane was applied onto a portion of the glass substrate to be brought into contact with the seal member in the same manner as described above, and dried at 100°C for 10 minutes. Thus, the glass substrate surface-coated with the silane coupling agent was prepared.

Further, a methanol solution of 1 wt% 3-acryloxypropyltrimethoxysilane was applied onto thin glass pieces to be brought into seal members, and dried at 150°C for 10 minutes. Thus, the thin glass pieces surface-coated with the silane coupling agent was prepared.

### (II) Preparation of photopolymerizable composition essentially containing hydrogenated elastomer derivative having at least one (meth)acryloyl group at at least one of opposite molecular terminals

A photopolymerizable composition (A) was prepared by blending 3g of the hydrogenated elastomer derivative (a), 7g of dimethyloldicyclopentane dimethacrylate and 0.5 g of the photo-radical polymerization initiator.

### (III) Assembling of dye-sensitized solar cell

A main sealing operation was performed by applying the photopolymerizable composition (A) onto the portion of one of the glass substrates to be brought into contact with the seal member by means of a dispenser, bonding the glass substrates to each other with their electrically conductive transparent electrode films facing inward, and irradiating the photopolymerizable composition (A) with ultraviolet radiation (3J/cm²) in the stream of nitrogen. Thereafter, an acetonitrile solution of 0.05 mol% iodine was injected as an electrolyte solution into a space defined between the bonded glass substrates through an opening of the glass substrate. Then, an end sealing operation was performed in substantially the same manner as described above by applying the sealing material onto the thin glass pieces, placing the thin glass pieces over the openings, and irradiating the sealing material with ultraviolet radiation (3J/cm²) in the stream of nitrogen. Thus, the intended dye-sensitized solar cell was assembled. The cell was subjected to an endurance test to be described later. In the following inventive examples and comparative examples, dye-sensitized solar cells were produced in substantially the same manner, and subjected to the endurance test.

### Example 2

A dye-sensitized solar cell was assembled in substantially the same manner as in Example 1, except that a methanol solution of 1 wt% 3-methacryloxypropyltrimethoxysilane was applied as the silane coupling agent on portions of glass substrates to be brought into contact with a seal member.

### Example 3

A dye-sensitized solar cell was assembled in substantially the same manner as in Example 1, except that the photopolymerizable composition (A) was prepared by blending 7 g of the hydrogenated elastomer derivative (a), 3 g of dimethyloldicyclopentane dimethacrylate and 0.5 g of the photo-radical polymerization initiator.

### Example 4

A dye-sensitized solar cell was assembled in substantially the same manner as in Example 1, except that the hydrogenated elastomer derivative (b) was used instead of the hydrogenated elastomer derivative (a).

### Example 5

A dye-sensitized solar cell was assembled in substantially the same manner as in Example 1, except that the photopolymerizable composition (A) was prepared by blending 5 g of the hydrogenated elastomer derivative (a), 5 g of 1,6-hexandiol diacrylate and 0.5 g of the photo-radical polymerization initiator.

### Example 6

A dye-sensitized solar cell was assembled in substantially the same manner as in Example 1, except that the hydrogenated elastomer derivative (c) was used instead of the hydrogenated elastomer derivative (a).

### Example 7

A dye-sensitized solar cell was assembled in substantially the same manner as in Example 1, except that the hydrogenated elastomer derivative (d) was used instead of the hydrogenated elastomer derivative (a).

### Example 8

A dye-sensitized solar cell was assembled in substantially the same manner as in Example 7, except that a methanol solution of 1 wt% 3-methacryloxypropyltrimethoxysilane was applied as the silane coupling agent on portions of glass substrates to be brought into contact with a seal member.

### Example 9

A dye-sensitized solar cell was assembled in substantially the same manner as in Example 7, except that the photopolymerizable composition (A) was prepared by blending 7 g of the hydrogenated elastomer derivative (d), 3 g of dimethyloldicyclopentane dimethacrylate and 0.5 g of the photo-radical polymerization initiator.

### Example 10

A dye-sensitized solar cell was assembled in substantially the same manner as in Example 7, except that the hydrogenated elastomer derivative (e) was used instead of the hydrogenated elastomer derivative (d).

### Example 11

A dye-sensitized solar cell was assembled in substantially the same manner as in Example 7, except that the photopolymerizable composition (A) was prepared by blending 5 g of the hydrogenated elastomer derivative (d), 3 g of 1,6-hexandiol diacrylate and 0.5 g of the photo-radical polymerization initiator.

### Example 12

A dye-sensitized solar cell was assembled in substantially the same manner as in Example 7, except that the hydrogenated elastomer derivative (f) was used instead of the hydrogenated elastomer derivative (d).

### Example 13

A dye-sensitized solar cell was assembled in substantially the same manner as in Example 1, except that 1 g of the organically treated swellable mice was added to the photopolymerizable composition (A) of Example 1 and the resulting mixture was milled through a three-roll mill (having a roll gap of 0.1 µm) ten times.

### Example 14

A dye-sensitized solar cell was assembled in substantially the same manner as in Example 1, except that 15 g of the organically treated synthetic smectite was added to the photopolymerizable composition (A) of Example 1 and the resulting mixture was milled through a three-roll mill (having a roll gap of 0.1 µm) ten times.

### Example 15

A dye-sensitized solar cell was assembled in substantially the same manner as in Example 1, except that 10 g of the organically treated spherical silica α was added to the photopolymerizable composition (A) of Example 1 and the resulting mixture was milled through a three-roll mill (having a roll gap of 0.1 µm) ten times.

### Example 16

A dye-sensitized solar cell was assembled in substantially the same manner as in Example 1, except that 10 g of the organically treated spherical silica β was added to the photopolymerizable composition (A) of Example 1 and the resulting mixture was milled through a three-roll mill (having a roll gap of 0.1 µm) ten times.

### Example 17

A dye-sensitized solar cell was assembled in substantially the same manner as in Example 1, except that 10 g of the organically treated spherical silica γ was added to the photopolymerizable composition (A) of Example 1 and the resulting mixture was milled through a three-roll mill (having a roll gap of 0.1 µm) ten times.

### Comparative Example 1

A dye-sensitized solar cell was assembled in substantially the same manner as in Example 1, except that portions of glass substrates to be brought into contact with a seal member were not subjected to any surface coating treatment.

### Comparative Example 2

A dye-sensitized solar cell was assembled in substantially the same manner as in Example 1, except that a methanol solution of 1 wt% 3-glycidoxypropyltrimethoxysilane was applied as the silane coupling agent on portions of glass substrates to be brought into contact with a seal member.

### Comparative Example 3

A dye-sensitized solar cell was assembled in substantially the same manner as in Example 1, except that the unsaturated elastomer derivative (g) was used instead of the hydrogenated elastomer derivative (a).

### Comparative Example 4

A dye-sensitized solar cell was assembled in substantially the same manner as in Example 7, except that portions of glass substrates to be brought into contact with a seal member were not subjected to any surface coating treatment.

### Comparative Example 5

A dye-sensitized solar cell was assembled in substantially the same manner as in Example 7, except that a methanol solution of 1 wt% 3-glycidoxypropyltrimethoxysilane was applied as the silane coupling agent on portions of glass substrates to be brought into contact with a seal member.

### Comparative Example 6

A dye-sensitized solar cell was assembled in substantially the same manner as in Example 7, except that the unsaturated elastomer derivative (h) was used instead of the hydrogenated elastomer derivative (d).

The dye-sensitized solar cells thus obtained were allowed to stand in a thermostatic chamber at 40°C at 90%RH (relative humidity) for 50 days for test. Then, an endurance test was performed by the following methods. The results of the test are shown below in Table 1.

### Liquid leakage

An electrolyte solution filling area as seen from an upper side of the dye-sensitized solar cell was measured immediately after the assembling and after the test. An area percentage of the filling area measured after the test with respect to the filling area measured immediately after the assembling was determined, which was defined as an index of liquid leakage. Without the liquid leakage, the area percentage is 100%. The degree of the liquid leakage is increased as the area percentage decreases. This measurement is based on the fact that, if the electrolyte solution leaks, a space is correspondingly created, in which the electrolyte solution is not present, and the electrolyte solution filling area after the test is smaller than that before the test.

### Swelling

If the electrolyte solution (containing iodine) permeates into the seal member in the assembled dye-sensitized solar cell, colorization with the iodine occurs transversely of the seal member (from the inside to the outside parallel to the substrates). Therefore, the width of the colorization with the iodine was measured, which was defined as an index of the swelling of the seal member with the electrolyte solution (based on the fact that the swelling occurs as a result of the permeation of the electrolyte solution). The swelling is less liable to occur when the width of the coloration is smaller. Since the width of the seal member is 5 mm at the maximum, the width of the coloration with the iodine is also 5 mm at the maximum.

**Table 1**

| | Liquid leakage (area: %) | Swelling (Coloration width: mm) |
|---|---|---|
| Example 1 | 100 | 0.3 |
| Example 2 | 100 | 0.3 |
| Example 3 | 95 | 1.8 |
| Example 4 | 95 | 0.5 |
| Example 5 | 95 | 0.4 |
| Example 6 | 100 | 0.3 |
| Example 7 | 100 | 0.3 |
| Example 8 | 100 | 0.3 |
| Example 9 | 95 | 1.8 |
| Example 10 | 95 | 0.5 |
| Example 11 | 95 | 0.4 |
| Example 12 | 100 | 0.3 |
| Example 13 | 100 | 0.2 |
| Example 14 | 100 | 0.2 |
| Example 15 | 100 | ≤ 0.05 |
| Example 16 | 100 | ≤ 0.05 |
| Example 17 | 100 | ≤ 0.05 |
| Comparative Example 1 | 0 | 5.0 (overall width) |
| Comparative Example 2 | 10 | 5.0 (overall width) |
| Comparative | 70 | 5.0 (overall width) |
| Example 3 | | |
| Comparative Example 4 | 0 | 5.0 (overall width) |
| Comparative Example 5 | 10 | 5.0 (overall width) |
| Comparative Example 6 | 70 | 5.0 (overall width) |

Table 1 shows that the products of the inventive examples were substantially free from the leakage of the electrolyte solution with a filling area percentage of 95% or greater as a result of the measurement of the liquid leakage. As a result of the measurement of the swelling, the products of Examples 3 and 9 each had a coloration width of 1.8 mm, but the products of the other inventive examples had little swelling with a coloration width of 0.5 mm or less. Therefore, the dye-sensitized solar cells of the inventive examples were excellent in sealing property.

On the other hand, the products of the comparative examples apparently suffered from the leakage of the electrolyte solution with a filling area percentage of 0 to 70 % as a result of the measurement of the liquid leakage. As a result of the measurement of the swelling, the products of the comparative examples disadvantageously suffered from significant swelling with a coloration width of 5 mm, which was the maximum coloration width.

The fluidity and the seal width dimensional accuracy of each of the uncured photopolymerizable compositions (A) (corresponding to the component (II) in Example 1) for the seal members of the dye-sensitized solar cells were measured by the following methods. The results are shown below in Table 2.

### Fluidity

The viscosity of each of the photopolymerizable compositions (A) (of Examples 1 and 15 to 17) was measured at 25°C at 5 rpm by means of an EM-type rotary viscometer available from Tokyo Keiki, Inc. Further, the thixotropy index (0.5 rpm viscosity/5 rpm viscosity) was calculated.

### Seal width dimensional accuracy

After the main sealing operation was performed by applying each of the photopolymerizable compositions (A) (of Examples 1 and 15 to 17) onto the portion of the glass substrate to be brought into contact with the seal member by means of a dispenser, bonding the glass substrates to each other with their electrically conductive transparent electrode films facing inward in opposed relation, and irradiating the photopolymerizable composition (A) with ultraviolet radiation (3J/cm²) in the stream of nitrogen, the seal width of the resulting seal member was measured.

**Table 2**

| | Fluidity | | Seal width dimensional accuracy |
|---|---|---|---|
| | Viscosity dPa · s at 25°C at 5 rpm | Thixotropy index (0.5 rpm viscosity/5 rpm viscosity) at 25°C at 5 rpm | Maximum width - minimum width (mm) |
| Example 1 | 100 | 1.0 | 3.5 |
| Example 15 | 448 | 3.7 | 0.4 |
| Example 16 | 660 | 4.9 | 0.3 |
| Example 17 | 752 | 5.4 | 0.3 |

The results shown in Table 2 indicate that the photopolymerizable compositions of Examples 15 to 17 containing the insulative spherical inorganic filler each had a particularly greater thixotropy, and was improved in seal width dimensional accuracy. Particularly, the photopolymerizable composition of Example 15 containing the organically treated spherical silica α had the lowest viscosity among the photopolymerizable compositions containing the insulative spherical inorganic fillers. Therefore, the photopolymerizable composition of Example 15 was more excellent in coatability when a coating operation is performed with the use of a dispenser, thereby providing a dye-sensitized solar cell having excellent sealing property.

The above results show that the products of the inventive examples were less susceptible to the liquid leakage and the swelling, and their seal members were excellent in durability, resistance to electrolyte solution and adhesiveness. Particularly, the products of Examples 15 to 17 were improved in seal width dimensional accuracy. Therefore, the dye-sensitized solar cells employing these photopolymerizable compositions were highly durable during prolonged storage and prolonged use.

### INDUSTRIAL APPLICABILITY

In the inventive dye-sensitized solar cell, the seal member is composed of the material cured by photopolymerizing the specific photopolymerizable composition, thereby obviating the need for the thermal curing. Accordingly, the dye-sensitized solar cell is free from separation of the seal member which may otherwise occur due to the evaporation of the electrolyte solution by the heating. Further, the seal member is free from the swelling and the degradation with the electrolyte solution during prolonged sealing use. In addition, the synergetic effect of the aforementioned specific silane coupling agent on the glass substrates provides higher adhesiveness and higher durability. Therefore, the present invention is widely applicable to dye-sensitized solar cells which particularly require higher durability, and provides highly reliable dye-sensitized solar cells.

## Claims

1. A dye-sensitized solar cell comprising:
a pair of glass substrates each having an electrically conductive transparent electrode film and disposed in predetermined spaced opposed relation with the electrically conductive transparent electrode films thereof facing inward;
a seal member disposed between the pair of glass substrates along a periphery of an electrically conductive transparent electrode film formation region to seal a space defined between the pair of glass substrates; and
an electrolyte solution filled in the sealed space,
wherein the seal member is composed of a material cured by photopolymerizing the following photopolymerizable composition (A), the pair of glass substrates each have a portion coated with a silane coupling agent of a (meth)acryloxyalkylsilane in contact with the seal member or in contact with the seal member through a different film, the silane coupling agent of a (meth)acryloxyalkylsilane is in contact with the glass substrate or in contact with the glass substrate through a different layer, and the seal member adhesively contacts the coated portion by using the adhesiveness of the seal member:
(A) a photopolymerizable composition essentially comprising a hydrogenated elastomer derivative having at least one (meth)acryloyl group at at least one of its opposite molecular terminals.

2. A dye-sensitized solar cell as set forth in claim 1, wherein the photopolymerizable composition (A) comprises a phyllosilicate organically treated with cations for ion exchange of Na ions intercalated between layers.

3. A dye-sensitized solar cell as set forth in claim 1 or 2, wherein the photopolymerizable composition (A) comprises an insulative spherical inorganic filler.

4. A dye-sensitized solar cell as set forth in any one of claims 1 to 3, wherein the silane coupling agent of the (meth)acryloxyalkylsilane is 3-(meth)acryloxypropyltrimethoxysilane.

5. A dye-sensitized solar cell as set forth in any one of claims 1 to 4, wherein the hydrogenated elastomer derivative of the composition (A) comprises a hydrogenated polybutadiene in its main chain.

6. A dye-sensitized solar cell as set forth in any one of claims 1 to 4, wherein the hydrogenated elastomer derivative of the composition (A) comprises a hydrogenated polyisoprene in its main chain.

7. A dye-sensitized solar cell as set forth in any one of claims 1 to 5, wherein the hydrogenated elastomer derivative of the composition (A) is a hydrogenated polybutadiene derivative obtained through a reaction between a hydrogenated polybutadiene polyol and a hydroxy(meth)acrylate compound by using a polyisocyanate as a linking group.

8. A dye-sensitized solar cell as set forth in any one of claims 1 to 4 and 6, wherein the hydrogenated elastomer derivative of the composition (A) is a hydrogenated polyisoprene derivative obtained through a reaction between a hydrogenated polyisoprene polyol and a hydroxy(meth)acrylate compound by using a polyisocyanate as a linking group.

9. A dye-sensitized solar cell as set forth in any one of claims 1 to 5, wherein the hydrogenated elastomer derivative of the photopolymerizable composition (A) is the following component (a1), and the photopolymerizable composition (A) further comprises the following components (b) and (c):
(a1) a hydrogenated polybutadiene derivative obtained through a reaction between a hydrogenated polybutadiene polyol and a hydroxy(meth)acrylate compound by using a polyisocyanate as a linking group;
(b) a poly(meth)acrylate compound; and
(c) a photopolymerization initiator.

10. A dye-sensitized solar cell as set forth in any one of claims 1 to 4 and 6, wherein the hydrogenated elastomer derivative of the photopolymerizable composition (A) is the following component (a2), and the photopolymerizable composition (A) further comprises the following components (b) and (c):
(a2) a hydrogenated polyisoprene derivative obtained through a reaction between a hydrogenated polyisoprene polyol and a hydroxy(meth)acrylate compound by using a polyisocyanate as a linking group;
(b) a poly(meth)acrylate compound; and
(c) a photopolymerization initiator.

11. A dye-sensitized solar cell as set forth in any one of claims 1 to 5, wherein the hydrogenated elastomer derivative of the composition (A) is a hydrogenated polybutadiene derivative obtained through a reaction between a hydrogenated polybutadiene polyol and a (meth)acryloyl-containing isocyanate compound.

12. A dye-sensitized solar cell as set forth in any one of claims 1 to 4 and 6, wherein the hydrogenated elastomer derivative of the composition (A) is a hydrogenated polyisoprene derivative obtained through a reaction between a hydrogenated polyisoprene polyol and a (meth)acryloyl-containing isocyanate compound.

13. A dye-sensitized solar cell as set forth in any one of claims 1 to 5, wherein the hydrogenated elastomer derivative of the photopolymerizable composition (A) is the following component (a3), and the photopolymerizable composition (A) further comprises the following components (b) and (c):
(a3) a hydrogenated polybutadiene derivative obtained through a reaction between a hydrogenated polybutadiene polyol and a (meth)acryloyl-containing isocyanate compound;
(b) a poly(meth)acrylate compound; and
(c) a photopolymerization initiator.

14. A dye-sensitized solar cell as set forth in any one of claims 1 to 4 and 6, wherein the hydrogenated elastomer derivative of the photopolymerizable composition (A) is the following component (a4), and the photopolymerizable composition (A) further comprises the following components (b) and (c):
(a4) a hydrogenated polyisoprene derivative obtained through a reaction between a hydrogenated polyisoprene polyol and a (meth)acryloyl-containing isocyanate compound;
(b) a poly(meth)acrylate compound; and
(c) a photopolymerization initiator.

## Patentansprüche

1. Farbstoffsensibilisierte Solarzelle, die Folgendes umfasst:
- ein Paar Glassubstrate, die jeweils einen elektrisch leitfähigen transparenten Elektrodenfilm aufweisen und in einer vorgegebenen beabstandeten gegenüberliegenden Beziehung angeordnet sind, wobei ihre elektrisch leitfähigen transparenten Elektrodenfilme nach innen weisen;
- ein Dichtungselement, das zwischen dem Paar Glassubstrate entlang eines Umfangsrandes einer elektrisch leitfähigen transparenten Elektrodenfilm-Bildungsregion angeordnet ist, um einen Raum abzudichten, der zwischen dem Paar Glassubstrate definiert ist; und
- eine Elektrolytlösung, die in den abgedichteten Raum eingefüllt ist,
wobei das Dichtungselement aus einem Material besteht, das durch Photopolymerisierung der folgenden photopolymerisierbaren Zusammensetzung (A) ausgehärtet wird, wobei das Paar Glassubstrate jeweils einen Abschnitt aufweist, der mit einem Silankopplungsmittel eines (Meth)acryloxyalkylsilans, das mit dem Dichtungselement in Kontakt steht oder über einen weiteren Film mit dem Dichtungselement in Kontakt steht, beschichtet ist, wobei das Silankopplungsmittel eines (Meth)acryloxyalkylsilans mit dem Glassubstrat in Kontakt steht oder mit dem Glassubstrat über eine weitere Schicht in Kontakt steht, und das Dichtungselement durch die Klebkraft des Dichtungselements in einem Klebekontakt mit dem beschichteten Abschnitt steht:
(A) eine photopolymerisierbare Zusammensetzung, die im Wesentlichen ein hydriertes Elastomerderivat mit mindestens einer (Meth)acryloylgruppe an mindestens einem seiner entgegengesetzten Molekularterminierungen umfasst.

2. Farbstoffsensibilisierte Solarzelle nach Anspruch 1, wobei die photopolymerisierbare Zusammensetzung (A) ein Phyllosilikat umfasst, das organisch mit Kationen für einen Ionenaustausch von Na-Ionen, die zwischen Schichten interkaliert sind, behandelt wurde.

3. Farbstoffsensibilisierte Solarzelle nach Anspruch 1 oder 2, wobei die photopolymerisierbare Zusammensetzung (A) einen isolierten kugelförmigen anorganischen Füllstoff umfasst.

4. Farbstoffsensibilisierte Solarzelle nach einem der Ansprüche 1 bis 3, wobei das Silankopplungsmittel des (Meth)acryloxyalkylsilans 3-(Meth)acryloxypropyltrimethoxysilan ist.

5. Farbstoffsensibilisierte Solarzelle nach einem der Ansprüche 1 bis 4, wobei das hydrierte Elastomerderivat der Zusammensetzung (A) ein hydriertes Polybutadien in seiner Hauptkette umfasst.

6. Farbstoffsensibilisierte Solarzelle nach einem der Ansprüche 1 bis 4, wobei das hydrierte Elastomerderivat der Zusammensetzung (A) ein hydriertes Polyisopren in seine Hauptkette umfasst.

7. Farbstoffsensibilisierte Solarzelle nach einem der Ansprüche 1 bis 5, wobei das hydrierte Elastomerderivat der Zusammensetzung (A) ein hydriertes Polybutadienderivat ist, das durch eine Reaktion zwischen einem hydrierten Polybutadienpolyol und einer Hydroxy(meth)acrylat-Verbindung unter Verwendung eines Polyisocyanats als eine Vernetzungsgruppe erhalten wird.

8. Farbstoffsensibilisierte Solarzelle nach einem der Ansprüche 1 bis 4 und 6, wobei das hydrierte Elastomerderivat der Zusammensetzung (A) ein hydriertes Polyisoprenderivat ist, das durch eine Reaktion zwischen einem hydrierten Polyisoprenpolyol und einer Hydroxy(meth)acrylat-Verbindung unter Verwendung eines Polyisocyanats als eine Vernetzungsgruppe erhalten wird.

9. Farbstoffsensibilisierte Solarzelle nach einem der Ansprüche 1 bis 5, wobei das hydrierte Elastomerderivat der photopolymerisierbaren Zusammensetzung (A) die folgende Komponente (a1) ist und die photopolymerisierbare Zusammensetzung (A) des Weiteren die folgenden Komponenten (b) und (c) umfasst:
(a1) ein hydriertes Polybutadienderivat, das durch eine Reaktion zwischen einem hydrierten Polybutadienpolyol und einer Hydroxy(meth)acrylat-Verbindung unter Verwendung eines Polyisocyanats als eine Vernetzungsgruppe erhalten wird;
(b) eine Poly(meth)acrylat-Verbindung; und
(c) einen Photopolymerisationsinitiator.

10. Farbstoffsensibilisierte Solarzelle nach einem der Ansprüche 1 bis 4 und 6, wobei das hydrierte Elastomerderivat der photopolymerisierbaren Zusammensetzung (A) die folgende Komponente (a2) ist und die photopolymerisierbare Zusammensetzung (A) des Weiteren die folgenden Komponenten (b) und (c) umfasst:
(a2) ein hydriertes Polyisoprenderivat, das durch eine Reaktion zwischen einem hydrierten Polyisoprenpolyol und einer Hydroxy(meth)acrylat-Verbindung unter Verwendung eines Polyisocyanats als eine Vernetzungsgruppe erhalten wird;
(b) eine Poly(meth)acrylat-Verbindung; und
(c) einen Photopolymerisationsinitiator.

11. Farbstoffsensibilisierte Solarzelle nach einem der Ansprüche 1 bis 5, wobei das hydrierte Elastomerderivat der Zusammensetzung (A) ein hydriertes Polybutadienderivat ist, das durch eine Reaktion zwischen einem hydrierten Polybutadienpolyol und einer (Meth)acryloyl-haltigen Isocyanat-Verbindung erhalten wird.

12. Farbstoffsensibilisierte Solarzelle nach einem der Ansprüche 1 bis 4 und 6, wobei das hydrierte Elastomerderivat der Zusammensetzung (A) ein hydriertes Polyisoprenderivat ist, das durch eine Reaktion zwischen einem hydrierten Polyisoprenpolyol und einer (Meth)acryloyl-haltigen Isocyanat-Verbindung erhalten wird.

13. Farbstoffsensibilisierte Solarzelle nach einem der Ansprüche 1 bis 5, wobei das hydrierte Elastomerderivat der photopolymerisierbaren Zusammensetzung (A) die folgende Komponente (a3) ist und die photopolymerisierbare Zusammensetzung (A) des Weiteren die folgenden Komponenten (b) und (c) umfasst:
(a3) ein hydriertes Polybutadienderivat, das durch eine Reaktion zwischen einem hydrierten Polybutadienpolyol und einer (Meth)acryloylhaltigen Isocyanat-Verbindung erhalten wird;
(b) eine Poly(meth)acrylat-Verbindung; und
(c) einen Photopolymerisationsinitiator.

14. Farbstoffsensibilisierte Solarzelle nach einem der Ansprüche 1 bis 4 und 6, wobei das hydrierte Elastomerderivat der photopolymerisierbaren Zusammensetzung (A) die folgende Komponente (a4) ist und die photopolymerisierbare Zusammensetzung (A) des Weiteren die folgenden Komponenten (b) und (c) umfasst:
(a4) ein hydriertes Polyisoprenderivat, das durch eine Reaktion zwischen einem hydrierten Polyisoprenpolyol und einer (Meth)acryloylhaltigen Isocyanat-Verbindung erhalten wird;
(b) eine Poly(meth)acrylat-Verbindung; und
(c) einen Photopolymerisationsinitiator.

## Revendications

1. Cellule solaire à pigments photosensibles comprenant :
- une paire de substrats en verre dont chacun comprend une pellicule transparente électroconductrice servant d'électrode et qui se font face en déterminant un espace prédéfini, les pellicules transparentes électroconductrices servant d'électrode se trouvent sur leur côté intérieur,
- un élément de scellage, disposé entre la paire de substrats en verre sur la périphérie d'une région formant une pellicule transparente électroconductrice servant d'électrode, qui scelle un espace défini entre la paire de substrats en verre et
- une solution électrolytique qui remplit l'espace scellé,
dans laquelle l'élément de scellage est en un matériau traité en photopolymérisant la composition photopolymérisable (A) ci-dessous, chacun de la paire de substrats en verre a une partie revêtue d'un agent adhésif au silane d'un (méth)acryloxyalkylsilane en contact avec l'élément de scellage ou en contact avec l'élément de scellage par l'intermédiaire d'une autre pellicule, l'agent adhésif au silane d'un (méth)acryloxyalkylsilane est en contact avec le substrat en verre ou en contact avec le substrat en verre par l'intermédiaire d'une autre couche, l'élément de scellage est en contact adhésif avec la partie revêtue en utilisant les propriétés adhésives de l'élément de scellage :
(A) une composition photopolymérisable comprenant principalement un dérivé d'élastomère hydrogéné comportant au moins un groupe (méth)acryloyl à au moins une de ses extrémités moléculaires opposées.

2. Cellule solaire à pigments photosensibles selon la revendication 1, dans laquelle la composition photopolymérisable (A) comprend un phyllosilicate traité organiquement par des cations pour assurer l'échange d'ions Na qui se trouvent entre les couches.

3. Cellule solaire à pigments photosensibles selon la revendication 1 ou 2, dans laquelle la composition photopolymérisable (A) comprend une charge inorganique, isolante et sphérique.

4. Cellule solaire à pigments photosensibles selon l'une des revendications 1 à 3, dans laquelle l'agent adhésif au silane du (méth)acryloxy-alkyl-silane est le 3-(méth)acryloxy-propyltri-méthoxysilane.

5. Cellule solaire à pigments photosensibles selon l'une des revendications 1 à 4, dans laquelle le dérivé d'élastomère hydrogéné de la composition (A) comprend dans sa chaîne principale un polybutadiène hydrogéné.

6. Cellule solaire à pigments photosensibles selon l'une des revendications 1 à 4, dans laquelle le dérivé d'élastomère hydrogéné de la composition (A) comprend dans sa chaîne principale un poly-isoprène hydrogéné.

7. Cellule solaire à pigments photosensibles selon l'une des revendications 1 à 5, dans laquelle le dérivé d'élastomère hydrogéné de la composition (A) est un dérivé de polybutadiène hydrogéné obtenu par réaction entre un polyol de polybutadiène et un composé d'hydroxy(méth)acrylate en utilisant un poly-isocyanate comme groupe de liaison.

8. Cellule solaire à pigments photosensibles selon l'une des revendications 1 à 4 et 6, dans laquelle le dérivé d'élastomère hydrogéné de la composition (A) est un dérivé de poly-isoprène hydrogéné obtenu par réaction entre un polyol de poly-isoprène hydrogéné et un composé d'hydroxy(méth)acrylate en utilisant un poly-isocyanate comme groupe de liaison.

9. Cellule solaire à pigments photosensibles selon l'une des revendications 1 à 5, dans laquelle le dérivé d'élastomère hydrogéné de la composition photopolymérisable (A) est le composé (a 1) ci-dessous et la composition photopolymérisable (A) comprend en outre les composés (b) et (c) ci-dessous :
(a 1) un dérivé de polybutadiène hydrogéné obtenu par réaction entre un polyol de polybutadiène hydrogéné et un composé d'hydroxy(méth)acrylate en utilisant un poly-isocyanate comme groupe de liaison,
(b) un composé de poly(méth)acrylate et
(c) un initiateur de photopolymérisation.

10. Cellule solaire à pigments photosensibles selon l'une des revendications 1 à 4 et 6, dans laquelle le dérivé d'élastomère hydrogéné de la composition photopolymérisable (A) est le composé (a 2) ci-dessous et la composition photopolymérisable (A) comprend en outre les composés (b) et (c) ci-dessous :
(a 2) un dérivé de poly-isoprène hydrogéné obtenu par réaction entre un polyol de poly-isoprène hydrogéné et un composé d'hydroxy(méth)acrylate en utilisant un poly-isocyanate comme groupe de liaison
(b) un composé de poly(méth)acrylate et
(c) un initiateur de photopolymérisation.

11. Cellule solaire à pigments photosensibles selon l'une des revendications 1 à 5, dans laquelle le dérivé d'élastomère hydrogéné de la composition (A) est un dérivé de polybutadiène hydrogéné obtenu par réaction entre un polyol de polybutadiène hydrogéné et un composé d'isocyanate contenant du (méth)acryoloyl.

12. Cellule solaire à pigments photosensibles selon l'une des revendications 1 à 4 et 6, dans laquelle le dérivé d'élastomère hydrogéné de la composition (A) est un dérivé de poly-isoprène hydrogéné obtenu par réaction entre un polyol de poly-isoprène hydrogéné et un composé d'isocyanate contenant du (méth)acryoloyl.

13. Cellule solaire à pigments photosensibles selon l'une des revendications 1 à 5, dans laquelle le dérivé d'élastomère hydrogéné de la composition photopolymérisable (A) est le composé (a 3) ci-dessous et la composition photopolymérisable (A) comprend en outre les composés (b) et (c) ci-dessous :
(a 3) un dérivé de polybutadiène hydrogéné obtenu par réaction entre un polyol de polybutadiène hydrogéné et un composé d'isocyanate contenant du (méth)acryoloyl,
(b) un composé de poly(méth)acrylate et
(c) un initiateur de photopolymérisation.

14. Cellule solaire à pigments photosensibles selon l'une des revendications 1 à 4 et 6, dans laquelle le dérivé d'élastomère hydrogéné de la composition photopolymérisable (A) est le composé (a 4) ci-dessous et la composition photopolymérisable (A) comprend en outre les composés (b) et (c) ci-dessous :
(a 4) un dérivé de poly-isoprène hydrogéné obtenu par réaction entre un polyol de poly-isoprène hydrogéné et un composé d'isocyanate contenant du (méth)acryoloyl,
(b) un composé de poly(méth)acrylate et
(c) un initiateur de photopolymérisation.
